# EUROPÄISCHE PATENTANMELDUNG

(11) **EP 1 300 297 A1**
(43) Veröffentlichungstag der Anmeldung: **09.04.2003**
(21) Anmeldenummer: 02011416.1
(22) Anmeldetag: 24.05.2002
(51) Int. Cl.: B60R 21/18

(54) **Gurtairbag**

(30) Priorität: 05.10.2001 DE 10149294
(71) Anmelder: Bayerische Motoren Werke Aktiengesellschaft, 80809 München (DE)
(72) Erfinder: Schaper, Jens, Dr., 80335 München (DE); Taubenberger, Josef, 83052 Bruckmühl (DE); Meister, Markus, 81245 München (DE); Sertl, Hans-Peter, 95478 Kemnath (DE)

(57) **Zusammenfassung**

Gurtairbag (3) für Fahrzeuge, der im inaktivierten Zustand unbeweglich im Bereich des oberen Befestigungs- bzw. Umlenkpunktes des Sicherheitsgurts (8) angeordnet ist. Ein "Ende" (4) des Airbags (3) ist am "Anbringungsort" des Airbags, d.h. im Bereich des oberen Befestigungs- bzw. Umlenkpunktes des Sicherheitsgurts (8) fahrzeugfest angeordnet. Ein anderes "Ende" (6) des Airbags (3), das sich im inaktivierten Zustand ebenfalls am "Anbringungsort" befindet, weist ein schlaufenartiges Gurtführungselement (7) auf, das beim Aufblasen des Airbags (3) vom oberen Befestigungs- bzw. Umlenkpunkt des Sicherheitsgurts (8) in Richtung zur Gurtschnalle schräg nach unten entlang des Gurts vorgegeschoben wird.

## Beschreibung

Die vorliegende Erfindung betrifft einen Airbag gemäß dem Oberbegriff des Patentanspruches 1.

Aus dem Stand der Technik sind eine Vielzahl von Gurtairbagsystemen bekannt, bei denen der Airbag in den Sicherheitsgurt integriert ist. Nachteilig an derartigen Gurtairbagsystemen ist, dass der Sicherheitsgurt aufgrund des integrierten Airbags nicht mehr so flexibel, sondern starrer als ein herkömmlicher Sicherheitsgurt ist. Ein weiterer Nachteil ist darin zu sehen, dass der Airbag im inaktivierten Zustand permanenten mechanischen Belastungen ausgesetzt ist, insbesondere beim Anschnallen und beim Abschnallen aber auch im angeschnallten Zustand, wenn sich der Fahrer bewegt. Dies kann zu Funktionsbeeinträchtigungen bzw. zum Ausfall des Airbags führen.

Aus der DE 197 24 191 C2 ist ein Gurtairbagsystem bekannt, bei dem ein Ende des Airbags im Bereich eines Endes des Sicherheitsgurts fest am Fahrzeug fixiert ist. An einem anderen Ende des Airbags ist eine Schlaufe vorgesehen, durch die der Sicherheitsgurt hindurchgeführt ist. Beim Aufblasen des Airbags wird die Schlaufe entlang des Sicherheitsgurts vorgeschoben. Der Sicherheitsgurt und die Schlaufe dienen also als "Führung" für den Airbag. Primärer Zweck dieser Airbaganordnung ist es, Bewegungen, d.h. mechanische Belastungen des Airbags im inaktivierten Zustand möglichst gering zu halten.

Aus der EP 05 92 815 A1 ist ein Gurtairbag bekannt, der die Funktion eines Kopfairbags hat. Ein Ende des Airbags ist im Bereich des oberen Umlenkbeschlags eines Dreipunktsicherheitsgurtes fest mit dem Fahrzeug verbunden. Bei diesem Airbagsystem ist der Airbag im inaktivierten Zustand permanenten mechanischen Beanspruchungen ausgesetzt, was unerwünscht ist.

Aufgabe der Erfindung ist es, ein verbessertes Gurtairbagsystem zu schaffen, bei dem mechanische Beanspruchungen des Airbags im inaktivierten Zustand durch Gurtbetätigungen vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem mit einem Dreipunktsicherheitsgurt zusammenwirkenden Airbag, der im inaktivierten Zustand unbeweglich im Bereich des oberen Befestigungs- bzw. Umlenkpunktes des Sicherheitsgurts angeordnet ist. Ein "Ende" des Airbags ist am "Anbringungsort" des Airbags, d.h. im Bereich des oberen Befestigungs- bzw. Umlenkpunktes des Sicherheitsgurts fahrzeugfest bzw. sitzfest angeordnet. Ein anderes "Ende" des Airbags, das sich im inaktivierten Zustand ebenfalls am "Anbringungsort" befindet, weist ein schlaufenartiges Gurtführungselement auf, das beim Aufblasen des Airbags vom oberen Befestigungs- bzw. Umlenkpunkt des Sicherheitsgurts in Richtung zur Gurtschnalle schräg nach unten entlang des Gurts vorgegeschoben wird.

Der Airbag ist im inaktivierten Zustand in einem Airbagbehälter untergebracht, der im Bereich des oberen Befestigungs- bzw. Umlenkpunktes des Sicherheitsgurts angeordnet ist. Im Unterschied zum Stand der Technik ist der Airbag im inaktivierten Zustand vollkommen unbeweglich in dem Airbagbehälter angeordnet. Mechanische Beanspruchungen des Airbags durch Betätigen des Sicherheitsgurtes werden somit vollkommen vermieden.

Vorzugsweise ist der obere Befestigungs- bzw. Umlenkpunkt des Sicherheitsgurts durch ein "Gurtführungselement" gebildet, das seitlich im oberen Bereich der Sitzlehne angeordnet ist. An der Sitzlehne angeordnete bzw. in die Sitzlehne integrierte Gurtführungselemente werden bei hochwertigen Cabrios bereits seit geraumer Zeit eingesetzt. Bei derartigen Sitzen steht von der Fahrzeugsitzlehne nach oben ein Gurtträger ab, der bei einem Unfall einen Großteil der Gurtkräfte aufnimmt. Seitlich am Gurtträger ist ein "Gurtführungsohr" befestigt, das einen Führungsschlitz aufweist, durch den sich der Sicherheitsgurt von der Sitzvorderseite zur Sitzrückseite erstreckt. An der Sitzrückseite läuft der Sicherheitsgurt in das Innere der Lehne hinein, wo sein eines Ende auf einen in den Fahrzeugsitz integrierten Gurtaufwickler aufgerollt ist.

Der Airbag bzw. der Airbagbehälter gemäß der Erfindung sind vorzugsweise unmittelbar oberhalb des Gurtführungsohrs angeordnet. Der Sicherheitsgurt ist dabei durch die Führungsschlaufe des Airbags hindurchgeführt. Im inaktivierten Zustand des Airbags ist weder der Airbag selbst noch dessen Führungsschlaufe von außen sichtbar. Beim Auslösen des Airbags wird ein Deckel des Airbagbehälters geöffnet. Durch das Aufblasen des Airbags wird dieser dann mit seiner Führungsschlaufe entlang des Sicherheitsgurts in Richtung zur Gurtschnalle vorgeschoben. Der Airbag erstreckt sich im aufgeblasenen Zustand vom Gurt aus nach oben und schützt den seitlichen Kopfbereich des Fahrers bzw. Beifahrers für alle Sitze mit Gurtführung über die Schulter. Vorzugsweise ist am Gurtträger auf der der Gurtführung bzw. dem Airbagbehälter gegenüberliegenden Seite eine Kopfstütze befestigt. In die Kopfstütze kann ein Gasgenerator zum Aufblasen des Airbags integriert sein.

Die oben beschriebene Airbaganordnung eignet sich zwar insbesondere für Cabrios, bei denen der obere Befestigungs- bzw. Umlenkpunkt des Sicherheitsgurts an der Sitzlehne vorgesehen ist. Prinzipiell ist aber auch eine Anwendung bei herkömmlichen Fahrzeugen möglich und zwar sowohl im Frontals auch im Fondbereich, wobei sich der obere Befestigungs- bzw. Umlenkpunkt des Sicherheitsgurts an der B- bzw. C-Säule des Fahrzeugs befindet.

Im folgenden wird die Erfindung an Hand eines Ausführungsbeispieles im Zusammenhang mit der Zeichnung näher erläutert. Es zeigen:
- Figur 1: in schematischer Darstellung das Grundprinzip der Erfindung bei inaktiviertem Airbag; und
- Figur 2: den Airbag im aufgeblasenen Zustand.

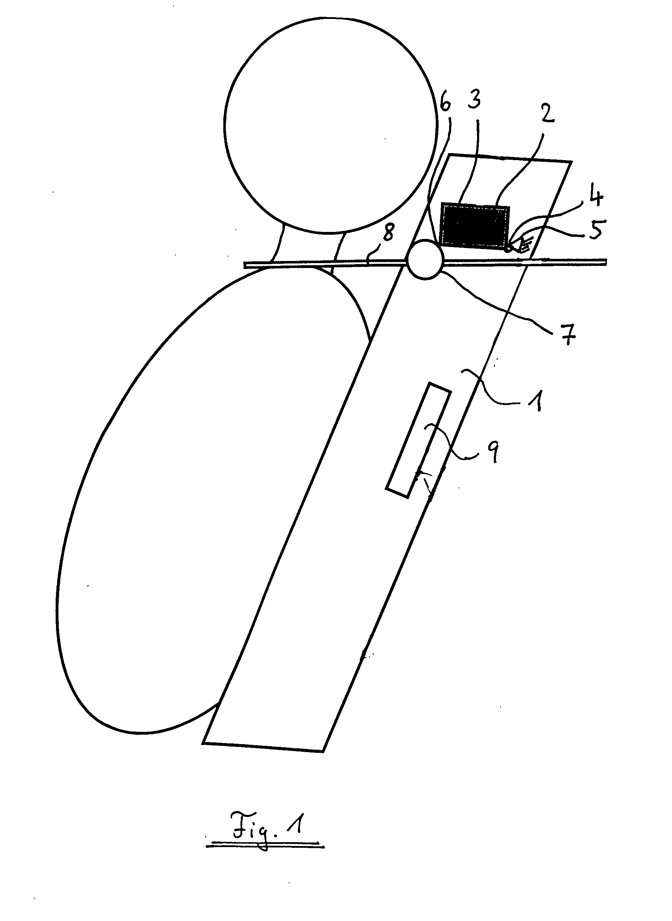

**Figur 1** zeigt in schematischer Darstellung eine Lehne 1 eines Fahrzeugsitzes. Im oberen Bereich der Lehne 1 ist ein Airbagbehälter 2 mit einem darin untergebrachten Airbag 3 angeordnet. Der Airbag 3 ist mit einem "Ende" 4 fest mit dem Fahrzeug bzw. mit der Lehne verbunden, was hier nur schematisch durch ein "Festlager" 5 angedeutet ist. Ein anderes "Ende" 6 des Airbags weist eine Schlaufe bzw. Öse 7 auf. Durch die Schlaufe 7 ist ein Sicherheitsgurt 8 hindurchgeführt.

Bei modernen hochwertigen Cabrios, z.B. bei den Vordersitzen des aktuellen 3er Cabrio von BMW, ist im äußeren Drittel der Fahrzeuglehne ein Gurtträger vorgesehen, der nach oben von der eigentlichen Fahrzeuglehne absteht. An der Außenseite des Gurtträgers ist ein "Führungsohr" angeordnet, durch das der Sicherheitsgurt hindurch von der Sitzvorderseite zur Sitzrückseite geführt ist. Das Führungsohr (nicht dargestellt) befindet sich in Höhe des Airbags 3 bzw. der Schlaufe 7 und bildet einen oberen Befestigungs- bzw. Umlenkpunkt für den Gurt 8. An der Rückseite der Sitzlehne läuft der Sicherheitsgurt - was hier ebenfalls nicht dargestellt ist - nach unten in das Innere der Sitzlehne hinein, wo das Gurtende auf einen in den Fahrzeugsitz integrierten Gurtaufwickler aufgerollt ist.

In Fig. 1 ist im Inneren der Lehne 1 ein Gasgenerator 9 zum Aufblasen des Airbags 3 vorgesehen. Der Gasgenerator 9 kann alternativ dazu auch im oberen Bereich der Lehne angeordnet sein. Bei modernen Cabriositzen ist an dem o.g. Gurtträger eine Kopfstütze (nicht dargestellt) befestigt. In diesem Fall kann der Gasgenerator auch in die Kopfstütze integriert sein.

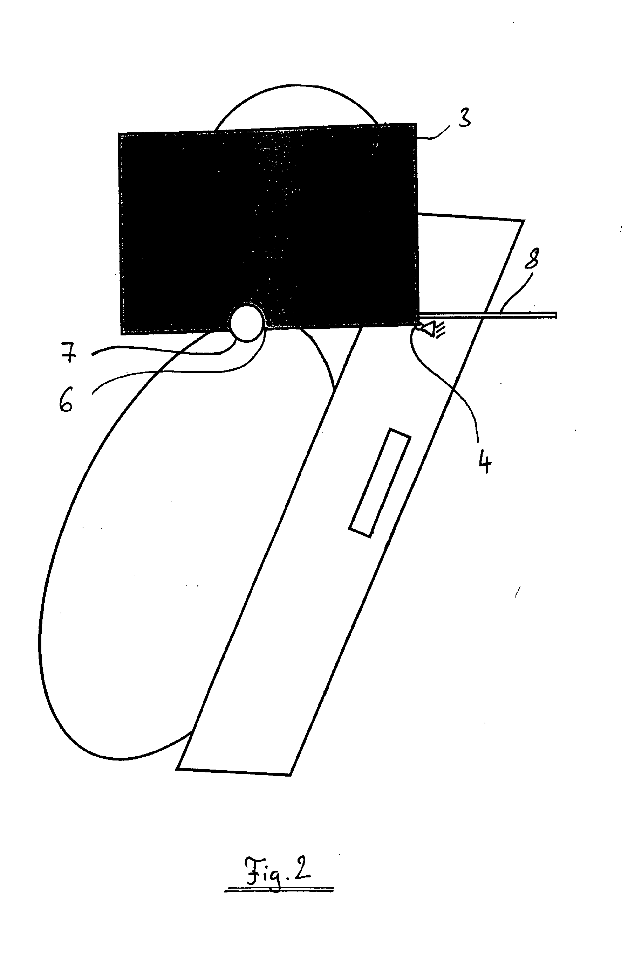

**Figur 2** zeigt den Airbag der Figur 1 in aufgeblasenem Zustand. Wie bereits erwähnt ist das hintere Ende 4 des Airbags 3 fahrzeug- bzw. sitzlehnenfest. Beim Aufblasen des Airbags 3 wird das vordere "verschiebliche" Ende 6 mit der Schlaufe 7 am Sicherheitsgurt 8 entlang in Richtung zur Gurtschnalle (nicht dargestellt) verschoben. Der Sicherheitsgurt dient also als "Führung" für den Airbag.

Ein ganz wesentlicher Vorteil der Airbaganordnung gegenüber dem Stand der Technik besteht darin, dass der Airbag im Bereitschaftszustand (Fig. 1) fahrzeugfest, d.h. absolut unbeweglich angeordnet ist. Der Sicherheitsgurt 8 kann beim Anschnallen und beim Abschnallen sowie bei Gurtbewegungen im angeschnallten Zustand ungehindert durch die Schlaufe 7 des inaktivierten Airbags hindurchrutschen. Der Airbag selbst wird dabei überhaupt nicht bewegt. Folglich entstehen durch Gurtbewegungen auch keinerlei mechanische Beanspruchungen des Airbags.

## Patentansprüche

1. Gurtairbag für Fahrzeuge, wobei der Airbag an einer oberen Befestigungs- bzw. Umlenkstelle des Sicherheitsgurts fest mit dem Fahrzeug verbunden ist und ein schlaufenartiges Führungselement aufweist, durch das der Sicherheitsgurt hindurchgeführt ist und das beim Aufblasen des Airbags von der Befestigungs- bzw. Umlenkstelle aus entlang des Sicherheitsgurts verschoben wird,
**dadurch gekennzeichnet, dass** die Befestigungs- bzw. Umlenkstelle des Sicherheitsgurts (8) im oberen Bereich an einer Lehne (1) eines Fahrzeugsitzes vorgesehen ist.

2. Airbag nach Anspruch 1,
**dadurch gekennzeichnet, dass** der Airbag (3) im inaktivierten Zustand in einem Airbagbehälter (2) angeordnet ist, der fest mit der Lehne (1) verbunden ist.

3. Airbag nach Anspruch 1 oder 2,
**dadurch gekennzeichnet, dass** von der Lehne nach oben ein Gurtträger absteht, der eine Gurtführung aufweist.

4. Airbag nach Anspruch 3,
**dadurch gekennzeichnet, dass** die Gurtführung durch ein seitlich vom Gurtträger abstehendes Ohr gebildet ist, das einen Führungsschlitz aufweist und dass der Sicherheitsgurt (8) von der Sitzvorderseite durch den Führungsschlitz zur Sitzrückseite und dort durch eine Öffnung nach unten in das Sitzinnere verläuft.

5. Airbag nach Anspruch 3 oder 4,
**dadurch gekennzeichnet, dass** der Airbagbehälter (2) oberhalb der Gurtführung angeordnet ist.

6. Airbag nach einem der Ansprüche 1 bis 5,
**dadurch gekennzeichnet, dass** ein Ende des Sicherheitsgurts (8) auf einen Gurtaufwickler aufgerollt ist und dass der Gurtaufwickler in den Fahrzeugsitz integriert ist.

7. Airbag nach Anspruch 6,
**dadurch gekennzeichnet, dass** der Gurtaufwickler in die Lehne (1) oder in die B-Säule, C-Säule oder die Hutablage eines Fahrzeugs integriert ist.

8. Airbag nach einem der Ansprüche 3 bis 7,
**dadurch gekennzeichnet, dass** an dem Gurtträger seitlich eine Kopfstütze befestigt ist.

9. Airbag nach Anspruch 8
**dadurch gekennzeichnet, dass** in die Kopfstütze ein Gasgenerator (9) für den Airbag (3) integriert ist.
